(19) Europäisches Patentamt
European Patent Office
Office européen des brevets

(11) **EP 3 390 176 B1**

(12) **EUROPEAN PATENT SPECIFICATION**

(45) Date of publication and mention
of the grant of the patent:
**09.02.2022 Bulletin 2022/06**

(21) Application number: **16809809.3**

(22) Date of filing: **13.12.2016**

(51) International Patent Classification (IPC):
***B60T 8/1755*** *(2006.01)*

(52) Cooperative Patent Classification (CPC):
**B60T 8/1755; B60T 2201/122; B60T 2260/04**

(86) International application number:
**PCT/EP2016/080724**

(87) International publication number:
**WO 2017/102682 (22.06.2017 Gazette 2017/25)**

(54) **METHOD FOR CONTROLLING A VEHICLE**

VERFAHREN ZUR STEUERUNG EINES FAHRZEUGS

PROCÉDÉ POUR COMMANDER UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2015 GB 201522297**

(43) Date of publication of application:
**24.10.2018 Bulletin 2018/43**

(73) Proprietor: **Jaguar Land Rover Limited
Coventry, Warwickshire CV3 4LF (GB)**

(72) Inventors:
• **BIRCH, John
Coventry
Warwickshire CV3 4LF (GB)**
• **BEEVER, Paul
Coventry
Warwickshire CV3 4LF (GB)**
• **KOWALSKI, Krzysztof
Coventry
Warwickshire CV3 4LF (GB)**

(74) Representative: **Holmes, Matthew William et al
Jaguar Land Rover
Patent Department W/1/073
Abbey Road
Whitley
Coventry CV3 4LF (GB)**

(56) References cited:
DE-A1- 10 208 125    JP-A- 2012 035 698
US-A1- 2004 046 448    US-A1- 2007 185 638

EP 3 390 176 B1

**Description**

TECHNICAL FIELD

Aspects of the present invention relate to a method for controlling a vehicle and to a vehicle stability control system.

BACKGROUND

It is known for electric vehicles or hybrid vehicles to be provided with vehicle braking systems comprising both regenerative braking and frictional braking components. In such systems it is often the case that the regenerative braking components provide the majority of the braking function, with the frictional braking components being employed only where a braking request cannot be entirely satisfied by the regenerative braking components, or where it would be less efficient or effective to employ regenerative braking. A Vehicle Supervisory Controller (VSC) may be used to determine the level of regenerative braking available at any time, the VSC communicating the level of regenerative braking to a Brakes Control Module (BCM). An example thereof is given in US 2004 046 448 A1.

In such systems it is possible for a malfunction of a vehicle propulsion system to cause unintended regenerative braking to be applied to driven wheels of the vehicle. For example, a malfunction within the VSC may cause excessive regenerative braking to be requested by the BCM in one scenario. Alternatively, a fault with the invertor may result in excessive levels of regenerative braking being applied to a driven axle of the vehicle, or a mechanical failure in the gearbox may lead to selection of the wrong gear in a transmission system of the vehicle. Such malfunctions lead to the delivery of excessive positive or negative torque at the driven axle of the vehicle, resulting in a potential instability event due to loss of traction, such as understeer, oversteer or skidding of the vehicle.

It is known for a vehicle to be provided with a vehicle stability control system (SCS) that is configured to address the problem, mitigating the effect of a vehicle instability event. In particular, since November 2014, a vehicle SCS must be fitted in all vehicles sold within the European Union. At present, SCS functionality compares one or more inputs from the driver of the vehicle to a vehicle response, making a determination as to whether the response from the vehicle is as expected. An SCS can employ various sensors to monitor the vehicle behaviour, including a steering wheel angle sensor, a yaw rate sensor, a lateral acceleration sensor and wheel speed sensors. As an example, data from the steering wheel angle sensor and wheel speed sensor may be used to determine the desired yaw rate of the vehicle, while the yaw rate sensor can be used to determine an actual yaw rate of the vehicle. Vehicle stability control systems of this known type are disclosed in DE 102 08 125 A1 and US 2007/0185638 A1.

When the actual state of the vehicle does not correspond to the desired state, the SCS makes a determination that the vehicle is not responding to the driver's inputs as the driver would expect. For example, the driven wheels of the vehicle may have begun to slip, or the vehicle may be beginning to skid. The SCS thus determines that the vehicle is in an unstable state, and applies corrective action. In dependence on the particular strategy employed by the SCS, the corrective action may involve reducing, or limiting, the level of braking applied to the driven axle of the vehicle, or adjusting the torque applied to the driven wheels of the vehicle.

Such functionality helps to mitigate the effect of the application of excessive torque to the driven axle, attempting to regain control of the vehicle when slip or skidding is detected. However, in some instances, the functionality provided by a conventional SCS has been shown not to be able to mitigate the condition in a sufficient time frame to prevent the vehicle from deviating significantly from the path intended by the driver. There remains a need to provide a system with enhanced functionality, that more effectively and more efficiently attends to an instability event.

The present invention has been devised to mitigate or overcome at least some of the above-mentioned problems.

SUMMARY OF THE INVENTION

According to an aspect of the present invention, there is provided a method for controlling a vehicle according to independent claim 1, the method comprising: receiving data relating to a wheel slip event; determining a predicted vehicle yaw rate in dependence on the data relating to the wheel slip event; comparing the predicted vehicle yaw rate to a target yaw rate; and controlling a braking torque applied by a braking mechanism to at least one wheel of the vehicle, in dependence on the predicted vehicle yaw rate.

The predicted yaw rate is a future predicted yaw rate based on the current wheel slip data. Calculation of a predicted vehicle yaw rate allows the vehicle to respond to a future yaw rate, rather than a current yaw rate, such that the vehicle is able to react earlier to a determined wheel slip event. In this way, pre-emptive action can be taken so as to mitigate the effect of the wheel slip event, such as applying a braking torque at at least one wheel of the vehicle, for example. The possibility of the vehicle deviating from its intended path and intended orientation is thus minimised, and the driver is assisted in controlling the vehicle.

In one embodiment, the method may further comprise determining the predicted vehicle yaw rate in dependence on one or more of a measured vehicle speed, a value for longitudinal slip for one or more driven wheels of the vehicle and a value for vehicle lateral acceleration.

Advantageously, the method may comprise determining a yaw torque that is required to adjust the predicted vehicle yaw rate such that the predicted vehicle yaw rate equals or falls below the target yaw rate, and control the application of the determined yaw torque to the vehicle. A yaw rate of the vehicle is thus reduced before the vehicle yaw reaches the predicted vehicle yaw rate, so as to mitigate the effects of a potential instability event due to loss of traction.

The method may comprise receiving a steering wheel angle signal associated with a steering wheel angle sensor of the vehicle and receiving a wheel speed signal associated with one or more wheel speed sensors of the vehicle. The target yaw rate may be determined in dependence on the steering wheel angle signal and the wheel speed signal.

In an example, the method may comprise controlling the braking mechanism to increase the braking torque on a selected front wheel of the vehicle, such that the required yaw torque is achieved. Alternatively, the method may comprise controlling the braking mechanism to increase the braking torque on a pair of front wheels of the vehicle, such that the required yaw torque is achieved and such that the vehicle is decelerated.

The method comprises calculating a value for longitudinal slip of one or more driven wheels of the vehicle in dependence on a wheel speed signal associated with one or more wheels speed sensors of the vehicle. In this case, the method further comprises determining whether the calculated value for longitudinal slip of one or more driven wheels of the vehicle exceeds a predetermined longitudinal slip threshold value.

In one example, the method may comprise determining whether the calculated value for longitudinal slip is a positive or a negative value. Determining whether the calculated value for longitudinal slip is a positive or a negative value allows for the method of controlling the vehicle to depend on whether driven wheels of the vehicle are spinning or skidding, relative to a surface the vehicle is traversing.

The method may comprise determining whether a value for lateral acceleration of the vehicle exceeds a predetermined lateral acceleration threshold value.

Advantageously, the method may comprise determining a driver acceleration demand, in the event that the value for longitudinal slip is a positive value and the calculated value for longitudinal slip of one or more driven wheels of the vehicle exceeds the predetermined longitudinal slip threshold value. Additionally, the method may comprise comparing the driver acceleration demand to an acceleration demand threshold level. The method may comprise increasing a braking torque applied to selected wheels of the vehicle in the event that the driver acceleration demand falls below the acceleration demand threshold value. Such a check ensures that a braking torque is not applied to the selected wheels of the vehicle in the event that the vehicle is responding to an acceleration demand from the driver.

In one embodiment, the method may comprise controlling the braking mechanism to increase the braking torque on a pair of front wheels of the vehicle simultaneously, in the event that: the predetermined longitudinal slip threshold value of one or more driven wheels of the vehicle exceeds the predetermined longitudinal slip threshold value; a measured vehicle speed exceeds a predetermined vehicle speed threshold; and, the vehicle lateral acceleration equals or falls below the predetermined lateral acceleration threshold value. Advantageously, applying braking to both front wheels of the vehicle decelerates the vehicle in a controlled manner. The method may comprise controlling the braking mechanism to decelerate the vehicle until a vehicle speed falls below a vehicle speed threshold value. Further, the braking mechanism may be controlled such that the deceleration of the vehicle tends to zero as the vehicle speed tends towards the vehicle speed threshold value. The braking torque applied may be different to each of the front wheels so as to apply a net yaw to the vehicle to counter the predicted yaw.

The method may comprise taking action to mitigate a vehicle instability event by performing one or more of: increasing a steering gain associated with the vehicle, pre-charging friction brakes of the vehicle and triggering hazard warning lights of the vehicle. The steering gain may be increased in a direction that would counter a predicted yaw direction of the vehicle. Increasing the steering gain therefore increases the ease with which the driver is able to regain full control of the vehicle. Advantageously, the method may comprise taking action to mitigate a vehicle instability event by performing one or both of: requesting one or more battery contactors to open, and requesting a driveline disconnect clutch to open.

The predicted yaw rate may be a yaw rate predicted between approximately 0.25 second and 1 second in advance. The predicted yaw rate may be a yaw rate predicted 0.5 seconds in advance.

According to another aspect of the invention there is provided a system for controlling a vehicle according to independent claim 9, the system comprising: an electronic processor having one or more electrical inputs for receiving a signal indicative of data relating to a wheel slip event; and an electronic memory device electrically coupled to the electronic processor and having instructions stored therein, wherein the electronic processor is configured to access the memory device and execute the instructions stored therein such that it is configured to: determine a predicted vehicle yaw rate in dependence on the signal indicative of data relating to the wheel slip event; comparing the predicted vehicle yaw rate to a target yaw rate; and outputting a signal to control a braking torque applied by a braking mechanism to at least one wheel of the vehicle in dependence on the predicted vehicle yaw rate.

The one or more electrical inputs may receive a one or more signal indicative of one or more of a measured vehicle speed, a value for longitudinal slip for one or more driven wheels of the vehicle, and a value for vehicle lateral acceleration; and the electronic processor may be configured to access the memory device and execute the instructions stored therein such that it is configured to determine the predicted vehicle yaw rate in dependence on said one or more signal indicative of one or more of a measured vehicle speed, a value for longitudinal slip for one or more driven wheels of the vehicle and a value for vehicle lateral acceleration.

The electronic processor may be configured to access the memory device and execute the instructions stored therein such that it is configured to determine a required yaw torque that is required to adjust the predicted vehicle yaw rate such that the predicted vehicle yaw rate equals or falls below the target yaw rate.

The one or more electrical inputs may receive one or more signal indicative of a steering wheel angle signal associated with a steering wheel angle sensor of the vehicle and of a wheel speed associated with one or more wheel speed sensors of the vehicle, and the electronic processor may be configured to access the memory device and execute the instructions stored therein such that it is configured to determine the target yaw rate in dependence on the steering wheel angle signal and the wheel speed signal.

The electronic processor may be configured to access the memory device and execute the instructions stored therein such that it is configured to control said braking mechanism to increase the braking torque on a selected front wheel of the vehicle, such that the required yaw torque is achieved.

The electronic processor may be configured to access the memory device and execute the instructions stored therein such that it is configured to calculate a value for longitudinal slip of one or more driven wheels of the vehicle in dependence on a wheel speed signal associated with one or more wheels speed sensors of the vehicle.

In an embodiment the electronic processor may be configured to access the memory device and execute the instructions stored therein such that it is configured to: determine whether the calculated value for longitudinal slip of one or more driven wheels of the vehicle exceeds a predetermined longitudinal slip threshold value; determine whether the calculated value for longitudinal slip is a positive or a negative value; determine a driver acceleration demand in the event that the value for longitudinal slip is a positive value and that the calculated value for longitudinal slip of one or more driven wheels of the vehicle exceeds the predetermined longitudinal slip threshold value; compare the driver acceleration demand to an acceleration demand threshold level; and output a signal to increase a braking torque applied to selected wheels of the vehicle in the event that the driver acceleration demand falls below the acceleration demand threshold value.

In an embodiment the electronic processor may be configured to access the memory device and execute the instructions stored therein such that it is configured to: determine whether the calculated value for longitudinal slip of one or more driven wheels of the vehicle exceeds a predetermined longitudinal slip threshold value; determine whether a value for lateral acceleration of the vehicle exceeds a predetermined lateral acceleration threshold value; and, in the event that: the predetermined longitudinal slip threshold value of one or more driven wheels of the vehicle exceeds the predetermined longitudinal slip threshold value; a measured vehicle speed exceeds a predetermined vehicle speed threshold; and the vehicle lateral acceleration equals or falls below the predetermined lateral acceleration threshold value, output a signal to control the braking mechanism to increase the braking torque on a pair of front wheels of the vehicle simultaneously,

The electronic processor may be configured to access the memory device and execute the instructions stored therein such that it is configured to mitigate a vehicle instability event by outputting a signal to instruct one or more or more of: increasing a steering gain associated with the vehicle; pre-charging friction brakes of the vehicle; one or more battery contactors to open; and a driveline disconnect clutch to open.

According to another aspect of the invention, there is provided a vehicle comprising a controller or system in accordance with a previous aspect of the invention.

It is to be understood that the controller and control system described herein can comprise a control unit or computational device having one or more electronic processors. A vehicle and/or a system thereof may comprise a single control unit or electronic controller or alternatively different functions of the controller(s) may be embodied in, or hosted in, different control units or controllers. As used herein, the term "vehicle control system" will be understood to include both a single control unit or controller and a plurality of control units or controllers collectively operating to provide the required control functionality. A set of instructions could be provided which, when executed, cause said controller(s) or control unit(s) to implement the control techniques described herein (including the method(s) described below). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on or more electronic processors, optionally the same one or more processors as the first controller. It will be appreciated, however, that other arrangements are also useful, and therefore, the present invention is not intended to be limited to any particular arrangement. In any event, the set of instructions described above may be embedded in a computerreadable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

BRIEF DESCRIPTION OF THE DRAWINGS

One or more embodiments of the invention will now be described, by way of example only, with reference to the accompanying drawings, in which:

Figure 1 is a schematic plan view of a vehicle having a vehicle stability control system of one embodiment of the invention; and

Figure 2 is a flowchart illustrating a general method for controlling a vehicle according to one embodiment of the invention.

DETAILED DESCRIPTION

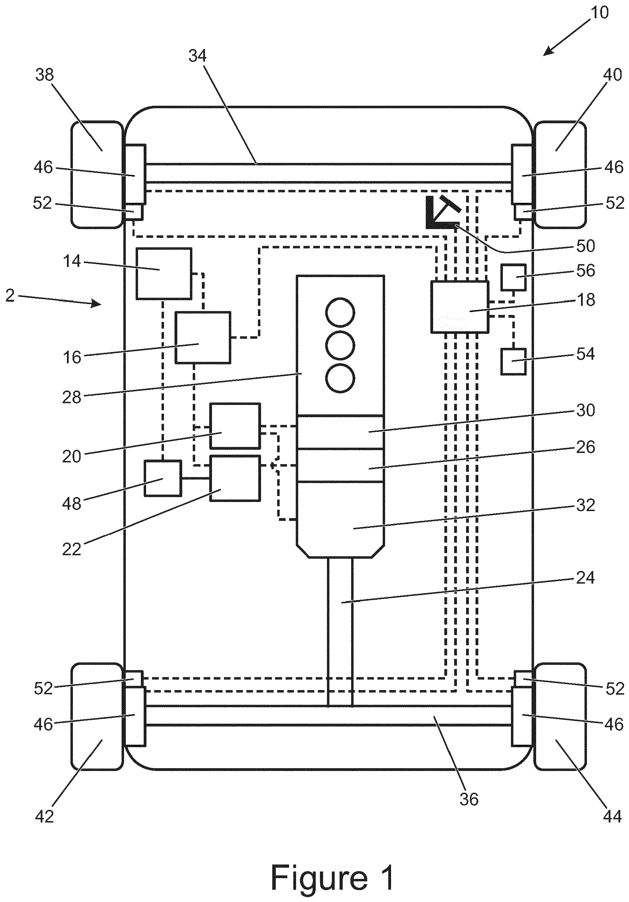

Figure 1 shows a schematic plan view of vehicle 10, and in particular, a hybrid vehicle. The vehicle 10 comprises control means in the form of a stability control system 12, the stability control system 12 having the following functional modules: an Engine Control Module (ECM) 14; a Vehicle Supervisory Controller (VSC) 16 a Brakes Control Module (BCM) 18; a Transmission Control Module (TCM) 20; and a high voltage power invertor 22.

A driveline 24 of the vehicle 10 is depicted in Figure 1, the driveline 24 being connected to two prime mover devices in the form of a crankshaft-integrated motor generator (CIMG) 26 and an internal combustion engine 28, with connection and disconnection between the engine 28 and the CIMG 26 being facilitated by way of a disconnect clutch 30. The CIMG 26 is further coupled to the input of a transmission 32 of the vehicle 10, an output of the transmission 32 being coupled to the driveline 24.

The driveline 24 is configured so as to transmit power from one or both of the internal combustion engine 28 and the CIMG 26 to a front axle 34 and/or a rear axle 36 of the vehicle 10, in order to drive a pair of front wheels 38, 40 and a pair of rear wheels 42, 44 of the vehicle 10, respectively. The TCM 20 is responsible for controlling operation of the transmission 32 of the vehicle 10, controlling gearing between the relevant prime mover device 26, 28 and the driveline 24 so as to achieve optimum vehicle performance and fuel economy.

The hybrid vehicle 10 is provided with both frictional and regenerative braking mechanisms for generating a brake torque to be applied to the front and/or rear axle 34, 36 of the vehicle 10. Alternatively, or additionally, one or more of the braking mechanisms may be configured to generate a brake torque to be applied to each wheel 38, 40, 42, 44 of the vehicle 10 independently. The BCM 18 is configured to control selection and operation of the braking mechanisms of the vehicle 10, and may be arranged to control any number of regenerative and frictional braking systems, such as an electro-hydraulic braking system or an electro-mechanical braking system.

The braking mechanisms associated with the frictional braking system are in the form of friction brakes 46, each friction brake 46 corresponding to a separate wheel 38, 40, 42, 44 of the vehicle 10. As is conventional, each friction brake 46 is made up of a brake calliper having a pair of brake pads. The brake pads are configured so as to be applied at the respective wheel 38, 40, 42, 44 to slow rotation of the wheel 38, 40, 42, 44, the brake pads being operable so as to be applied at each wheel 38, 40, 42, 44 independently of the remaining three wheels. Since frictional braking mechanisms are known, further explanation will be omitted for clarity.

As is known, the regenerative braking function is implemented by way of the CIMG 26 that comprises an electric motor capable of functioning as a generator when operated in a reverse torque direction. Whilst functioning as a generator, electromagnetic forces generated by the CIMG 26 create braking torque that is applied to one or more axles 34, 36 of the vehicle 10. The CIMG 26 can therefore apply regenerative braking to one or both axles 34, 36 of the vehicle 10, simultaneously reducing the speed of the vehicle 10 and producing electrical energy. The high voltage power invertor 22 is arranged so as to link the CIMG 26 and a battery 48 of the vehicle, such that the invertor 22 facilitates charging of the battery 48 whilst the CIMG acts as a generator.

The VSC 16 is arranged so as to control a number of functions of the hybrid vehicle 10, co-ordinating the individual prime mover devices 26, 28 and energy storage associated with the vehicle battery 48. The levels of energy stored within the battery 48 are monitored by the ECM 14, the ECM 14 continuously transmitting electrical signals to the VSC 16 to inform the VSC 16 as to the state of charge of the battery 48. In response to signals from the ECM 14, the VSC 16 is configured to control the interaction between the transmission 32, the CIMG 26 and the BCM 18, informing the BCM 18 of an amount of regenerative braking that is available.

The vehicle stability control system 12 is configured to receive input signals from a number of input devices that provide the BCM 18 with real-time information relating to the vehicle 10. The input devices include a brake pedal 50 of the vehicle 10. As is conventional, the brake pedal 50 may be used by the driver of the vehicle 10 to manually input brake commands to the vehicle 10. One or more sensors are configured to provide a signal that is indicative of a required level of braking force, or braking demand, associated with the brake pedal 50 of the vehicle. Such a brake pedal sensor may comprise an optical sensor, an electro-magnetic sensor, a potentiometer, or any other suitable sensor. The BCM 18 is configured to determine the blend of braking in dependence on the regenerative braking capacity information received from the VSC 16, calculating an appropriate level of regenerative braking and frictional braking that will satisfy the braking demand.

The input devices of the vehicle 10 extend to four wheel speed sensors 52, each wheel speed sensor 52 being associated with a separate wheel 38, 40, 42, 44 of the vehicle 10. As is known, each wheel speed sensor 52 transmits a signal to the BCM 18 of the stability control system 12 that is indicative of the speed of rotation of the respective wheel 38, 40, 42, 44. In addition, one or more sensors may be configured to provide a signal that is indicative of a required level of acceleration, or acceleration demand, associated with an accelerator pedal of the vehicle. As previously described in relation to the brake pedal sensor, the accelerator pedal sensor may comprise any suitable sensor, for example an optical sensor, an electro-magnetic sensor or a potentiometer.

The vehicle 10 is further provided with an accelerometer 54 and a steering wheel angle sensor 56. The accelerometer 54 and steering wheel angle sensor 56 send signals to the BCM 18 that are indicative of the lateral acceleration of the vehicle 10 and the orientation of a steering wheel of the vehicle 10, respectively. The orientation of the steering wheel is determined relative to a reference position. In one embodiment, the reference position corresponds to a natural resting position of the steering wheel and is assigned a value of $0^{0}$.

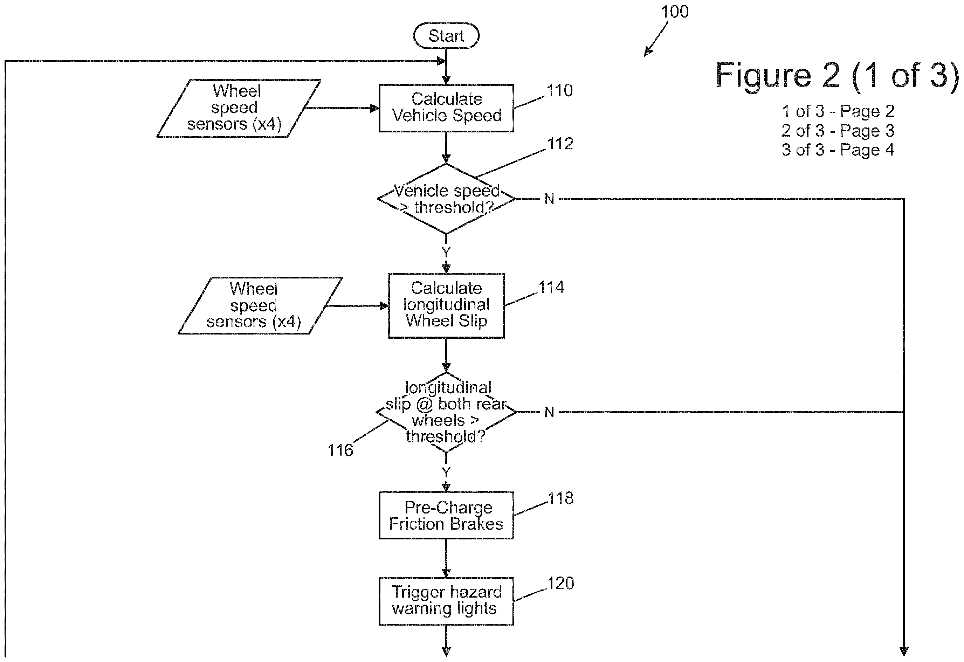

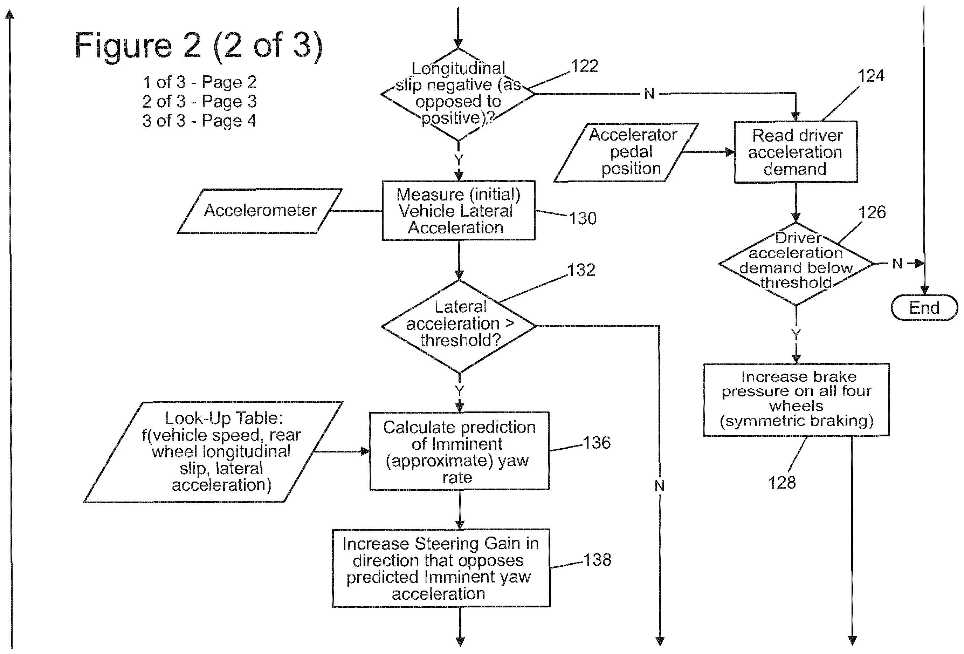

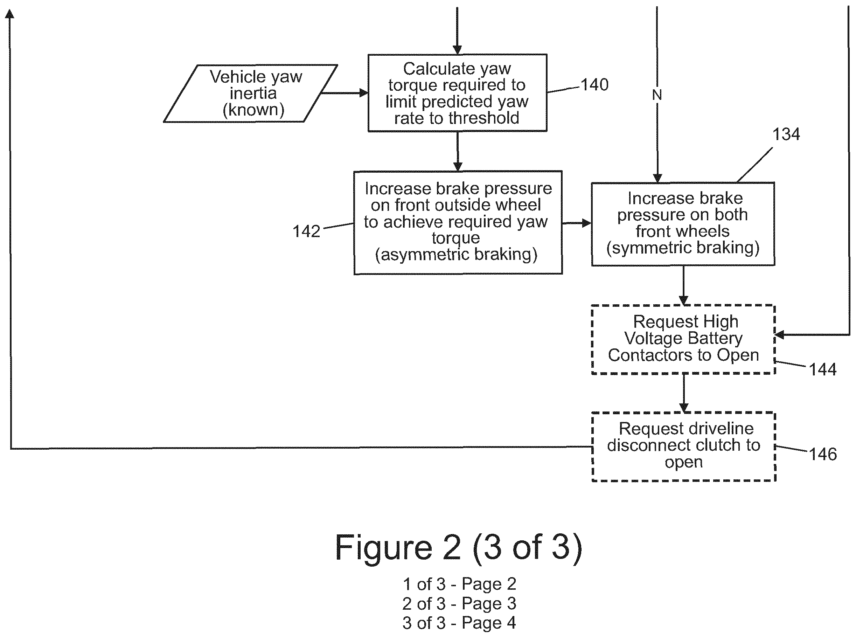

Operation of the vehicle stability control system 12 in use will now be described, with reference to the vehicle control method or process 100 shown in Figure 2. A known stability control system is configured to respond to a current vehicle state in a reactive manner, comparing the current state of the vehicle to an ideal state, with tolerable limits for deviation. For example, a current rate of change of wheel speed is compared to an acceptable rate of change of wheel speed. In the event that the rate of change of wheel speed is deemed to be unacceptable, torque to the wheel is reduced. Such known systems thus use existing, real-time error signals to assess the current state of the vehicle and to respond accordingly. The system 12 of the invention adds a predictive element, calculating a predicted vehicle yaw rate in dependence on current vehicle parameters. The system 12 of the invention is thus configured to respond to a predicted future state of the vehicle.

The vehicle stability control functionality is available automatically upon engine start. When activated, the vehicle stability control system 12 executes a series of steps to monitor a stability state of the vehicle 10, controlling stopping or slowing of the vehicle 10 when it is determined that the vehicle state is undesirable.

Consider, for example, a scenario in which the vehicle 10 is executing a relatively high speed cornering manoeuver. A malfunction within a propulsion system of the vehicle 10 may cause unintended positive or negative torque to be applied to the driven axle of the vehicle 10, such that the driven wheels begin to slip, for example. The system 12 continuously monitors the state of the vehicle 10, and applies corrective action, such as the application of a specific braking pattern, in order to counteract slip of the wheels 38, 40, 42, 44 once the predicted yaw rate exceeds a predetermined yaw rate threshold.

In this way, the vehicle stability control system 12 makes a prediction as to how the vehicle 10 is about to respond to a detected slip condition, and takes preemptive action so as to mitigate the effects of the slip condition. The vehicle stability control system 12 is able to apply corrective action before the vehicle 10 begins to depart from its intended orientation, minimising the possibility of any lateral deviation of the vehicle 10 from the desired path. In order that the vehicle state may be monitored continuously in real time, and for corrective action to be taken promptly, the vehicle stability control system 12 may execute the method 100 at a suitably high frequency, for example between around 20Hz and 100Hz.

Each wheel speed sensor 52 of the vehicle 10 is configured to communicate continuously with the BCM 18, such that the BCM 18 is provided with real-time information relating to the speed of rotation of each wheel 38, 40, 42, 44. In an initial step, the BCM 18 is able to use the information to carry out a vehicle speed check 110, calculating an instantaneous vehicle speed associated with the vehicle 10. The vehicle speed is determined in dependence on the wheel speed sensor readings at each one of the four wheels 38, 40, 42, 44.

The BCM 18 is provided with a predetermined threshold value for vehicle speed, against which the calculated vehicle speed is compared 112 in a next step, below which the yaw stability state of the vehicle 10 is considered to be insignificant. For example, below the predetermined threshold value for vehicle speed, the vehicle may not be expected to experience oversteer or understeer in the event that unintended regenerative braking torque is applied to an axle 34, 36 of the vehicle 10. Therefore, if it is determined that the vehicle speed falls below the predetermined vehicle speed threshold, the stability control system 12 does not take any action, and continues to monitor signals transmitted from the sensors 52, 54, 56. If the vehicle speed is above the threshold value, the BCM 18 makes an assessment as to whether or not wheels 38, 40, 42, 44 of the vehicle 10 are slipping.

In the event that the calculated vehicle speed exceeds the predetermined threshold value, the BCM 18 proceeds to calculate a longitudinal wheel slip 114 associated with each wheel 38, 40, 42, 44 of the vehicle 10, using data received from the wheel speed sensors 52. The BCM 18 is able to determine whether the level of longitudinal wheel slip is as expected. An undesirable level of slip may result from one of a number of situations in which excessive positive or negative torque has been applied to one or more axles 34, 36 of the vehicle 10, by way of regenerative braking, for example.

The longitudinal wheel slip calculation employs the determined vehicle speed and the wheel speed sensor reading at the wheel 38, 40, 42, 44 of interest. For example, with respect to a rear left wheel 42 of the vehicle 10, the longitudinal wheel slip calculation includes a comparison of the vehicle speed with the wheel speed sensor reading associated with the rear left wheel 42. Specifically, longitudinal wheel slip is calculated using the following equation (1):

$$longitudinal\ wheel\ slip = \frac{\omega r - v}{v}\ x\ 100\%$$

In equation (1), $\omega$ is angular velocity of the wheel, v is the vehicle speed and *r* is the wheel rolling radius.

As previously described in relation to the vehicle speed, the BCM 18 is provided with a predetermined threshold value for longitudinal slip, against which the instantaneous calculated values for longitudinal slip can be compared 116. In one embodiment, only the instantaneous longitudinal slip values associated with the driven wheels of the vehicle 10 are compared 116 to the threshold value. For the purposes of this description, the driven wheels will be described as being the rear wheels 42, 44 of the vehicle 10. It will be appreciated that the driven wheels may instead be the front wheels 38, 40 of the vehicle 10, or that all four wheels 38, 40, 42, 44 of the vehicle 10 may be driven.

In one embodiment, the threshold longitudinal slip value may be between 10% and 30%, for example 20%. In the event that the longitudinal slip value for each of the driven wheels falls below the threshold value, no further steps are executed and the vehicle stability control system 12 continues to monitor information from the wheel speed sensors 52.

In the event that the calculated vehicle speed is above the vehicle speed threshold and that the calculated longitudinal slip value is greater than 20%, the BCM 18 identifies an undesirable slip condition. At this stage then, a calculated longitudinal slip value for one or both of the driven wheels that exceeds the predetermined threshold value is indicative of the driven wheels of the vehicle 10 losing traction with the surface the vehicle 10 is traversing. The BCM 18 proceeds to implement a series of steps to mitigate the slip condition.

Firstly, the BCM 18 is configured to control precharging 118 of the friction brakes 46 of the vehicle 10 such that the brake pads are arranged to be rapidly engaged to control and slow the vehicle 10, should this be necessary. The BCM 18 may be further arranged to send a signal to a lights control module of the vehicle 10, initiating activation of hazard warning lights 120 of the vehicle 10 so as to alert any other nearby vehicle drivers. At this stage, the vehicle stability control system 12 is not configured to directly influence the speed or orientation of the vehicle 10, but to increase the ease and speed with which the driver is able to take evasive action to counter the slip condition.

In a next step, the BCM 18 is configured to determine whether the calculated longitudinal slip is a negative value or a positive value 122. A negative value for longitudinal slip is indicative of a situation in which the wheels 38, 40, 42, 44 of the vehicle 10 are rotating more slowly than would be expected for the instantaneous vehicle speed. A negative value therefore indicates that the vehicle 10 is skidding, relative to the surface being traversed. Conversely, a positive value for longitudinal slip indicates that the wheels 38, 40, 42, 44 of the vehicle 10 are rotating more quickly than would be expected for the instantaneous vehicle speed, and that the wheels 38, 40, 42, 44 are spinning relative to the surface.

In the event that the BCM 18 makes a determination of a positive longitudinal wheel slip, the BCM 18 first executes a check 124 to ensure that the wheels 38, 40, 42, 44 are not spinning as a result of an acceleration request from the driver of the vehicle 10. In practice, the BCM 18 may analyse a signal received from the accelerator pedal sensor of the vehicle 10, in order to determine the acceleration demand from the driver 124. The acceleration demand from the driver may subsequently be compared to a threshold level 126. If the acceleration demand is determined to fall above the threshold level, it is considered that the vehicle 10 is responding to an acceleration request from the driver, and no mitigating action is taken.

On the other hand, if the acceleration demand is determined to fall below the threshold level, the acceleration demand from the driver is considered to be lower than that required to produce the calculated longitudinal wheel slip. In this case, the BCM 18 is configured to send a signal to the friction brakes 46 associated with all four wheels 38, 40, 42, 44 of the vehicle 10, increasing a braking torque 128 applied to the wheels 38, 40, 42, 44 such that braking is symmetrical across the wheels 38, 40, 42, 44 and the vehicle 10 is decelerated. Controlling braking so as to be symmetrical across all four wheels 38, 40, 42, 44 of the vehicle 10 advantageously guards against an application of any yaw moment of the vehicle, and subsequent spinning of the vehicle 10. In one embodiment, the rate of deceleration of the vehicle 10 is controlled to tend to zero as the instantaneous vehicle speed tends to a predetermined vehicle speed. In an example, the predetermined vehicle speed is the predetermined threshold value for vehicle speed. Making a determination of the acceleration demand from the driver ensures that no action is taken to reduce torque applied to the driven wheels 42, 44 of the vehicle 10 in the event that the torque has been requested by the driver.

In the event that the BCM 18 makes a determination of a negative longitudinal wheel slip, this is an indication that unintended regenerative braking may have been applied to the driven wheels 42, 44 of the vehicle 10. In response, the BCM 18 measures the vehicle lateral acceleration 130, using the signals transmitted from the accelerometer 54 of the vehicle 10. The instantaneous vehicle lateral acceleration indicates how the vehicle 10 is cornering at the time at which the unintended braking torque is applied. Measuring the vehicle lateral acceleration 130 therefore allows the BCM 18 to predict how the vehicle 10 may respond to the unintended braking torque, and how motion of the vehicle will be affected. Once measured, the instantaneous vehicle lateral acceleration is subsequently compared to a predetermined lateral acceleration threshold value 132 that is stored within the BCM 18.

In the event that the vehicle lateral acceleration is determined to fall below the predetermined lateral acceleration threshold value, the BCM 18 proceeds to transmit a signal to the friction brakes 46 associated with the front wheels 38, 40 of the vehicle 10, so as to slow both front wheels 38, 40 of the vehicle 10 simultaneously 134. The resultant braking may be symmetrical, decelerating the vehicle 10 in a controlled manner and enabling the intended alignment of the vehicle 10 to be maintained. In this way, the BCM 18 initiates a controlled emergency stop. In one embodiment, the friction brakes 46 are controlled so as to continue applying a braking torque to the front wheels 38, 40 of the vehicle 10 until the instantaneous vehicle speed falls below the predetermined threshold value for vehicle speed, or until the calculated longitudinal slip falls below the threshold longitudinal slip value.

The scenario described above relates to a situation in which the instantaneous lateral acceleration is determined to fall below the predetermined lateral acceleration threshold. In this case, the vehicle 10 is not expected to spin as a result of the application of an unintended braking torque to the driven wheels 42, 44 of the vehicle 10. In an alternative scenario, the instantaneous lateral acceleration may be determined to exceed the lateral acceleration threshold, in effect, indicating that the vehicle 10 may be about to spin about a vertical axis of the vehicle 10 and indicating a direction in which this is likely to occur.

Upon a determination that the instantaneous lateral acceleration exceeds the lateral acceleration threshold value, the BCM 18 proceeds to make a prediction as to the expected response of the vehicle 10, calculating a predicted imminent yaw rate 136. In this case, the aim of the vehicle stability control system 12 is to predict how the vehicle 10 will react to the determined slip condition, such that appropriate counter-measures may be implemented. In one embodiment, the BCM 18 employs a 3D map, or look-up table, to correlate a number of the calculated vehicle parameters with predicted vehicle yaw rates. Specifically, the BCM 18 is configured to input data corresponding to the instantaneous vehicle speed, the instantaneous rear wheel slip and the instantaneous lateral acceleration, in order to extract the corresponding predicted yaw rate value. It will be appreciated that the BCM 18 may alternatively use a physics model to determine the predicted yaw rate.

The predicted yaw rate represents an imminent angular velocity of the vehicle 10 around a vertical axis of the vehicle 10, giving an indication of the degree to which the vehicle 10 is expected to deviate from its current orientation in the immediate future. In one embodiment, the predicted yaw rate is the yaw rate predicted for 0.5 seconds in the future.

In a next step, the BCM 18 increases steering gain 138, increasing the steering output relative to the steering wheel input, in a direction that would counter the predicted yaw rate. For example, if the predicted yaw rate indicates that the vehicle 10 will imminently tend to yaw in a clockwise direction, the steering gain would be applied so as to increase the ease with which the driver could instruct the vehicle 10 to turn in an anticlockwise direction. As a result, the orientation of the vehicle 10 in this direction is more responsive to the driver input, such that the vehicle 10 reacts more quickly to adjustments made to the steering wheel, assisting the driver in regaining control of the vehicle 10. An increased steering gain would not be applied in a direction of rotation that would increase the predicted yaw rate, and the driver would thus experience relatively high resistance if they chose to rotate the steering wheel in this direction.

The BCM 18 subsequently calculates a yaw rate that would be expected under normal operating conditions of the vehicle 10. The BCM 18 may employ a second look-up table to correlate an instantaneous steering wheel angle and instantaneous wheel speed values with values for the expected yaw rate. The expected yaw rate is a target yaw rate for the vehicle 10, against which the predicted yaw rate may be compared. Upon calculation of the target yaw rate, the BCM 18 is configured to execute a further calculation, determining a yaw torque 140 that would be required to influence the predicted yaw rate such that the predicted yaw rate equals or falls below the target yaw rate value.

In order to achieve the target yaw rate, the BCM 18 calculates a brake pressure distribution that would achieve the required yaw torque. The brake pressure distribution is selected so as to counteract the imminent rotation of the vehicle 10, and to apply or increase the braking torque at a front outside wheel of the vehicle 142. In this context, the term 'outside wheel' should be taken to mean the wheel that is rolling in the largest radius during cornering. The term 'inside wheel' should be interpreted accordingly to mean the wheel during cornering that follows the smallest cornering radius. In practice, the BCM 18 controls application of the brake pad associated with the front outside wheel, slowing rotation of the wheel to pre-empt and prevent a change in alignment of the vehicle 10. For example, if the predicted yaw rate implies that the vehicle 10 will imminently rotate in a clockwise direction when viewed from above, the brake pressure distribution is such that a braking torque is applied to the front left wheel 38 of the vehicle 10.

Alternatively, the brake pressure distribution may be configured to apply or increase a braking torque at the front outside wheel of the vehicle 10, in addition to the application or increase of a smaller braking torque at the front inside wheel of the vehicle 10. In this case, the brake pressure distribution is similarly configured to achieve the required yaw torque, but the application of braking torque to the front inside wheel simultaneously decelerates the vehicle 10.

The BCM 18 operates a further feedback loop at this stage, continuing to apply the braking pressure 142 until the calculated predicted yaw rate is determined to meet or to have fallen below the target yaw rate. Therefore, if the orientation of the vehicle 10 deviates to a lesser extent than expected, the braking torque may be reduced to account for the updated yaw rate prediction.

Once the predicted yaw rate has fallen below the target yaw rate, the BCM 18 may modify the braking distribution such that an even braking torque is applied 134 to both front wheels 38, 40 of the vehicle 10, slowing the vehicle in a controlled manner. As previously described, the symmetrical braking torque is applied until the calculated vehicle speed falls below the vehicle speed threshold value. Further, the deceleration is controlled such that the deceleration of the vehicle tends to zero as the vehicle speed tends towards the vehicle speed threshold value.

In response to a determination that the instantaneous longitudinal slip value exceeds a threshold value 116, it may be beneficial for the vehicle stability control system 12 to execute further mitigating actions to guard against deviation of the vehicle 10 from its intended path. Therefore, after the application of braking torque 128 at all four wheels 38, 40, 42, 44 of the vehicle 10 or, alternatively, after the application of braking torque 134 at both front wheels 38, 40 of the vehicle, the VSC 16 may transmit a signal to the battery 48 to request that high voltage contactors of the battery 48 be opened 114. Opening the contactors 144 removes the ability of the battery 48 to gain energy, and thus removes the ability of the system 12 to apply regenerative braking torque to the driven wheels 42, 44 of the vehicle 10.

In a next step, the vehicle stability control system 12 may be further configured to remove propulsion torque 146 from the driveline 24, opening the disconnect clutch 30 to eliminate the braking torque from the rear wheels 42, 44 and to remove a cause of the slip condition. Additionally, or alternatively, the vehicle stability control system 12 may control a change in an air suspension state in response to a determined longitudinal slip value, lowering the vehicle 10 to improve traction at the driven wheels 42, 44 and/or influencing a pitch rate and roll rate associated with the vehicle 10. If the vehicle 10 is provided with a Continuously Variable Damping (CVD) system, the vehicle stability control system 12 may be further configured to control dampers of the CVD, to mitigate the effect of an excessive longitudinal slip value.

In summary, the vehicle stability control system 12 is configured to continuously monitor vehicle states. In the event that conditions indicating a specific undesirable state are detected, the vehicle stability control system

tem 12 controls the vehicle 10 in dependence on the predicted, or future, vehicle yaw response that would be expected as a result of the specific undesirable state. In the event that the rear wheels 42, 44 of the vehicle 10 are determined to be slipping, the vehicle stability control system 12 configures the vehicle 10 to respond more quickly to inputs from the driver. For example, the steering gain is increased 138 or the friction brakes 46 are pre-charged 118.

Upon a subsequent determination that the vehicle 10 is not rotating, or spinning, about a vertical axis, the stability control system 12 implements application of a braking torque at both front wheels 38, 40 of the vehicle 10 simultaneously 134, bringing the vehicle speed below the vehicle speed threshold value. Alternatively, should the stability control system 12 determine that the vehicle 10 has begun to spin, a braking torque is applied to the front outside wheel of the vehicle 142. The strategy taken by the stability control system 12 is thus dependent on the current state of the vehicle 10, such that the most appropriate and effective action is taken.

Selection of an appropriate strategy is dependent upon the vehicle application and the driving scenario. For example, the appropriate response may be determined in part by an estimate of a coefficient of friction for the surface the vehicle 10 is traversing, an estimation function for which may be provided to the BCM 18. Such estimation functions are known.

In the described embodiment, each step is described as being executed in series. However, it will be appreciated that a number of steps may instead be carried out by the BCM 18 in parallel, or in an alternative order. For example, determination of the instantaneous vehicle speed 110, the instantaneous longitudinal wheel slip 114, the expected yaw rate and the predicted imminent vehicle yaw rate 136 may be continuous, the look-up table being constantly updated or refreshed. Alternatively, the predicted yaw rate may be calculated 136 only in the event that the threshold values for vehicle speed, longitudinal slip and lateral acceleration exceed the respective predetermined threshold levels.

Further, while each calculation is described as being executed by the BCM 18, it will be understood that these steps may be executed by any one of the modules of the vehicle stability control system 12, for example, the VSC 16. In addition, a third party module, such as the VSC 16, may be employed to check the calculated values so as to give a greater confidence in the results.

It will be appreciated that the stability control system 12 described is not exclusively applicable to hybrid or electric vehicles, and that the system may be applied to any vehicle having a powertrain that could cause the vehicle to deviate from its intended path or orientation while cornering, should the powertrain malfunction.

In one embodiment, it is feasible that the driver may intend for the driven, or rear, wheels 42, 44 of the vehicle 10 to lock as part of a driving manoeuver, for example a handbrake turn. In order to account for such a scenario, the stability control system 12 may be configured to determine whether certain conditions are met and, if the conditions are met, to inhibit application of any corrective action. As an example, upon detection of a slip condition, the BCM 18 may be configured to detect whether a signal from an electronic park brake switch is indicative of a parking brake of the vehicle 10 being in an engaged position. The BCM 18 may also be configured to determine whether the steering wheel is at a position 90º or more from the reference position of the steering wheel, as measured by the steering wheel angle sensor. In the event that the parking brake is in the engaged position and that the steering wheel has been rotated through an angle of 90º or more, the BCM 18 temporarily disables operation of the vehicle stability control system 12.

Many modifications may be made to the above examples without departing from the scope of the present invention as defined in the accompanying claims.

**Claims**

1. A method for controlling a vehicle (10) during a regenerative braking function, the method comprising:

   receiving (114) data relating to a negative longitudinal wheel slip event;
   determining a predicted vehicle yaw rate in dependence on the data relating to the wheel slip event; comparing the predicted vehicle yaw rate to a target yaw rate;
   controlling (128), (134), (142) a braking torque applied by a braking mechanism to at least one wheel (38), (40), (42), (44) of the vehicle (10) in dependence on the predicted vehicle yaw rate, and
   taking a further action to mitigate a vehicle instability event when a longitudinal slip value exceeds a threshold value.

2. The method of claim 1, further comprising determining the predicted vehicle yaw rate in dependence on one or more of a measured vehicle speed, a value for longitudinal slip for one or more driven wheels (42), (44) of the vehicle (10) and a value for vehicle lateral acceleration.

3. The method of claim 1 or claim 2, further comprising determining a required yaw torque that is required to adjust the predicted vehicle yaw rate such that the predicted vehicle yaw rate equals or falls below the target yaw rate,

   optionally, further comprising receiving a steering wheel angle signal associated with a steering wheel angle sensor (56) of the vehicle and receiving a wheel speed signal associated with one or more wheel speed sensors (52) of the vehicle (10), wherein the target yaw rate is determined in dependence on the steering wheel angle signal and the wheel speed signal, and/or further comprising controlling the braking mechanism to increase the braking torque on a selected front wheel (38), (40) of the vehicle, such that the required yaw torque is achieved.

4. The method of any preceding claim, further comprising calculating a value for longitudinal slip of one or more driven wheels (42), (44) of the vehicle (10) in dependence on a wheel speed signal associated with one or more wheel speed sensors (52) of the vehicle (10),

   optionally further comprising determining (116) whether the calculated value for longitudinal slip of one or more driven wheels of the vehicle (10) exceeds a predetermined longitudinal slip threshold value,
   further optionally comprising determining (122) whether the calculated value for longitudinal slip is a positive or a negative value.

5. The method of any preceding claim, further comprising determining (132) whether a value for lateral acceleration of the vehicle (10) exceeds a predetermined lateral acceleration threshold value.

6. The method of claim 4, further comprising:

   determining (124) a driver acceleration demand in the event that the value for longitudinal slip is a positive value and that the calculated value for longitudinal slip of one or more driven wheels (42), (44) of the vehicle (10) exceeds the predetermined longitudinal slip threshold value;
   comparing (126) the driver acceleration demand to an acceleration demand threshold level; and
   increasing (128) a braking torque applied to selected wheels (38), (40), (42), (44) of the vehicle (10) in the event that the driver acceleration demand falls below the acceleration demand threshold value.

7. The method of claim 5, when dependent on claim 4, further comprising controlling (134) the braking mechanism to increase the braking torque on a pair of front wheels (38), (40) of the vehicle (10) simultaneously, in the event that:

   the predetermined longitudinal slip threshold value of one or more driven wheels of the vehicle (10) exceeds the predetermined longitudinal slip threshold value;
   a measured vehicle speed exceeds a predetermined vehicle speed threshold; and,

the vehicle lateral acceleration equals or falls below the predetermined lateral acceleration threshold value.

8. The method of any of claims 4 to 7, further comprising taking action to mitigate a vehicle instability event by performing one or more of: increasing (138) a steering gain associated with the vehicle (10), pre-charging (118) friction brakes of the vehicle and triggering (120) hazard warning lights of the vehicle and/or further comprising taking action to mitigate a vehicle instability event by performing one or both of: requesting one or more battery contactors to open, and requesting a driveline disconnect clutch to open.

9. A system for controlling a vehicle (10) having a regenerative braking function, the system comprising:

an electronic processor having one or more electrical inputs for receiving a signal indicative of data relating to a negative longitudinal wheel slip event; and
an electronic memory device electrically coupled to the electronic processor and having instructions stored therein,
wherein the electronic processor is configured to access the memory device and execute the instructions stored therein such that it is configured to:

determine (136) a predicted vehicle yaw rate in dependence on the signal indicative of data relating to the wheel slip event;
compare the predicted vehicle yaw rate to a target yaw rate;
output a signal to control a braking torque applied by a braking mechanism to at least one wheel (38), (40), (42), (44) of the vehicle (10) in dependence on the predicted vehicle yaw rate, and
take a further action to mitigate a vehicle instability event when a longitudinal slip value exceeds a threshold value.

10. The system of claim 9 wherein said one or more electrical inputs are for receiving a one or more signal indicative of one or more of a measured vehicle speed, a value for longitudinal slip for one or more driven wheels (42), (44) of the vehicle (10) and a value for vehicle lateral acceleration; and wherein the electronic processor is configured to access the memory device and execute the instructions stored therein such that it is configured to determine the predicted vehicle yaw rate in dependence on said one or more signal indicative of one or more of a measured vehicle speed, a value for longitudinal slip for one or more driven wheels (42), (44) of the vehicle and a value for vehicle lateral acceleration.

11. The system of claim 9 or claim 10, wherein the electronic processor is configured to access the memory device and execute the instructions stored therein such that it is configured to determine a required yaw torque that is required to adjust the predicted vehicle yaw rate such that the predicted vehicle yaw rate equals or falls below the target yaw rate,

optionally wherein said one or more electrical inputs for receiving one or more signal indicative of a steering wheel angle signal associated with a steering wheel angle sensor (56) of the vehicle (10) and of a wheel speed associated with one or more wheel speed sensors (52) of the vehicle (10), and wherein the electronic processor is configured to access the memory device and execute the instructions stored therein such that it is configured to determine the target yaw rate in dependence on the steering wheel angle signal and the wheel speed signal.
and/or wherein the electronic processor is configured to access the memory device and execute the instructions stored therein such that it is configured to control said braking mechanism to increase the braking torque on a selected front wheel of the vehicle (10), such that the required yaw torque is achieved.

12. The system of any one of claims 9 to 11, wherein the electronic processor is configured to access the memory device and execute the instructions stored therein such that it is configured to calculate a value for longitudinal slip of one or more driven wheels of the vehicle (10) in dependence on a wheel speed signal associated with one or more wheels speed sensors of the vehicle (10),
optionally wherein the electronic processor is configured to access the memory device and execute the instructions stored therein such that it is configured to:

determine whether the calculated value for longitudinal slip of one or more driven wheels of the vehicle (10) exceeds a predetermined longitudinal slip threshold value;
determine whether the calculated value for longitudinal slip is a positive or a negative value;
determine a driver acceleration demand in the event that the value for longitudinal slip is a positive value and that the calculated value for longitudinal slip of one or more driven wheels of the vehicle (10) exceeds the predetermined longitudinal slip threshold value;
compare the driver acceleration demand to an acceleration demand threshold level; and
output a signal to increase a braking torque applied to selected wheels, of the vehicle (10) in the event that the driver acceleration demand falls below the acceleration demand threshold value.

**13.** The system of any one of claims 9 to 12 wherein the electronic processor is configured to access the memory device and execute the instructions stored therein such that it is configured to:

determine whether the calculated value for longitudinal slip of one or more driven wheels of the vehicle (10) exceeds a predetermined longitudinal slip threshold value;
determine whether a value for lateral acceleration of the vehicle (10) exceeds a predetermined lateral acceleration threshold value; and
in the event that: the predetermined longitudinal slip threshold value of one or more driven wheels of the vehicle (10) exceeds the predetermined longitudinal slip threshold value; a measured vehicle speed exceeds a predetermined vehicle speed threshold; and the vehicle lateral acceleration equals or falls below the predetermined lateral acceleration threshold value, outputting a signal to control the braking mechanism to increase the braking torque on a pair of front wheels of the vehicle simultaneously,

**14.** The system of claim 12 or 13, wherein the electronic processor is configured to access the memory device and execute the instructions stored therein such that it is configured to mitigate a vehicle instability event by outputting a signal to instruct one or more or more of: increasing a steering gain associated with the vehicle (10); pre-charging friction brakes of the vehicle (10); one or more battery contactors to open; and a driveline disconnect clutch to open.

**15.** A vehicle comprising a system in accordance with any one of claims 9 to 14.

**Patentansprüche**

**1.** Verfahren zum Steuern eines Fahrzeugs (10) während einer Nutzbremsfunktion, wobei das Verfahren Folgendes umfasst:

Empfangen (114) von Daten, die sich auf ein negatives Längsradschlupfereignis beziehen;
Bestimmen einer vorhergesagten Fahrzeuggierrate in Abhängigkeit von den Daten, die sich auf das Radschlupfereignis beziehen; Vergleichen der vorhergesagten Fahrzeuggierrate mit einer Zielgierrate;
Steuern (128), (134), (142) eines Bremsmoments, das durch einen Bremsmechanismus auf wenigstens ein Rad (38), (40), (42), (44) des Fahrzeugs (10) aufgebracht wird, in Abhängigkeit von der vorhergesagten Fahrzeuggierrate und
Ergreifen einer weiteren Maßnahme, um ein Fahrzeuginstabilitätsereignis abzuschwächen, wenn ein Längsschlupfwert einen Schwellenwert überschreitet.

**2.** Verfahren nach Anspruch 1, ferner umfassend das Bestimmen der vorhergesagten Fahrzeuggierrate in Abhängigkeit von einer gemessenen Fahrzeuggeschwindigkeit, einem Wert für den Längsschlupf für ein oder mehrere angetriebene Räder (42), (44) des Fahrzeugs (10) und/oder einem Wert für eine Fahrzeugquerbeschleunigung.

**3.** Verfahren nach Anspruch 1 oder 2, ferner umfassend das Bestimmen eines erforderlichen Gierdrehmoments, das erforderlich ist, um die vorhergesagte Fahrzeuggierrate derart anzupassen, dass die vorhergesagte Fahrzeuggierrate gleich der Zielgierrate ist oder unter diese sinkt,

optional ferner umfassend ein Empfangen eines Lenkradwinkelsignals, das mit einem Lenkradwinkelsensor (56) des Fahrzeugs verknüpft ist, und das Empfangen eines Radgeschwindigkeitssignals, das mit einem oder mehreren Radgeschwindigkeitssensoren (52) des Fahrzeugs (10) verknüpft ist, wobei die Zielgierrate in Abhängigkeit von dem Lenkradwinkelsignal und dem Radgeschwindigkeitssignal bestimmt wird, und/oder
ferner umfassend das Steuern des Bremsmechanismus, um das Bremsmoment an einem ausgewählten Vorderrad (38), (40) des Fahrzeugs derart zu erhöhen, dass das erforderliche Gierdrehmoment erreicht wird.

**4.** Verfahren nach einem der vorhergehenden Ansprüche, ferner umfassend ein Berechnen eines Werts für den Längsschlupf eines oder mehrerer angetriebener Räder (42), (44) des Fahrzeugs (10) in Abhängigkeit von einem Radgeschwindigkeitssignal, das mit einem oder mehreren Radgeschwindigkeitssensoren (52) des Fahrzeugs (10) verknüpft ist,

optional ferner umfassend das Bestimmen (116), ob der berechnete Wert für den Längsschlupf eines oder mehrerer angetriebener Räder des Fahrzeugs (10) einen zuvor bestimmten Längsschlupfschwellenwert überschreitet, ferner optional umfassend das Bestimmen (122), ob der berechnete Wert für den Längsschlupf ein positiver oder ein negativer Wert ist.

**5.** Verfahren nach einem der vorhergehenden Ansprüche, ferner umfassend das Bestimmen (132), ob ein Wert für die Querbeschleunigung des Fahrzeugs (10) einen zuvor bestimmten Querbeschleunigungsschwellenwert überschreitet.

6. Verfahren nach Anspruch 4, ferner Folgendes umfassend:

Bestimmen (124) einer Fahrerbeschleunigungsanforderung für den Fall, dass der Wert für den Längsschlupf ein positiver Wert ist und dass der berechnete Wert für den Längsschlupf eines oder mehrerer angetriebener Räder (42), (44) des Fahrzeugs (10) den zuvor bestimmten Längsschlupfschwellenwert überschreitet;
Vergleichen (126) der Fahrerbeschleunigungsanforderung mit einem Beschleunigungsanforderungsschwellenniveau; und
Erhöhen (128) eines Bremsmoments, das auf ausgewählte Räder (38), (40), (42), (44) des Fahrzeugs (10) aufgebracht wird, für den Fall, dass die Fahrerbeschleunigungsanforderung unter den Beschleunigungsanforderungsschwellenwert sinkt.

7. Verfahren nach Anspruch 5, wenn von Anspruch 4 abhängig, ferner umfassend das Steuern (134) des Bremsmechanismus, um das Bremsmoment an einem Paar Vorderrädern (38), (40) des Fahrzeugs (10) gleichzeitig zu erhöhen, für den Fall, dass:

der zuvor bestimmte Längsschlupfschwellenwert eines oder mehrerer angetriebener Räder des Fahrzeugs (10) den zuvor bestimmten Längsschlupfschwellenwert überschreitet;
eine gemessene Fahrzeuggeschwindigkeit eine zuvor bestimmte Fahrzeuggeschwindigkeitsschwelle überschreitet; und
die Fahrzeugquerbeschleunigung gleich dem zuvor bestimmten Querbeschleunigungsschwellenwert ist oder unter diesen sinkt.

8. Verfahren nach einem der Ansprüche 4 bis 7, ferner umfassend das Ergreifen der Maßnahme, um ein Fahrzeuginstabilitätsereignis durch Durchführen von Folgendem abzuschwächen: Erhöhen (138) einer Lenkverstärkung, die mit dem Fahrzeug (10) verknüpft ist, Vorladen (118) von Reibungsbremsen des Fahrzeugs und/oder Auslösen (120) von Warnblinkern des Fahrzeugs und/oder ferner umfassend das Ergreifen der Maßnahme, um ein Fahrzeuginstabilitätsereignis durch Durchführen von Folgendem abzuschwächen: Auffordern eines oder mehrerer Batterieschütze, sich zu öffnen, und/oder Auffordern einer Antriebsstrangtrennkupplung, sich zu öffnen.

9. System zum Steuern eines Fahrzeugs (10), das eine Nutzbremsfunktion aufweist, wobei das System Folgendes umfasst:

einen elektronischen Prozessor, der einen oder mehrere elektrische Eingänge zum Empfangen eines Signals aufweist, das Daten anzeigt, die sich auf ein negatives Längsradschlupfereignis beziehen; und
eine elektronische Speichervorrichtung, die mit dem elektronischen Prozessor elektrisch gekoppelt ist und Anweisungen aufweist, die darin gespeichert sind,
wobei der elektronische Prozessor konfiguriert ist, um auf die Speichervorrichtung zuzugreifen und die Anweisungen, die darin gespeichert sind, derart auszuführen, dass er für Folgendes konfiguriert ist:

Bestimmen (136) einer vorhergesagten Fahrzeuggierrate in Abhängigkeit von dem Signal, das Daten anzeigt, die sich auf das Radschlupfereignis beziehen;
Vergleichen der vorhergesagten Fahrzeuggierrate mit einer Zielgierrate;
Ausgeben eines Signals, um ein Bremsmoment, das durch einen Bremsmechanismus auf wenigstens ein Rad (38), (40), (42), (44) des Fahrzeugs (10) aufgebracht wird, in Abhängigkeit von der vorhergesagten Fahrzeuggierrate zu steuern, und
Ergreifen einer weiteren Maßnahme, um ein Fahrzeuginstabilitätsereignis abzuschwächen, wenn ein Längsschlupfwert einen Schwellenwert überschreitet.

10. System nach Anspruch 9, wobei der eine oder die mehreren elektrischen Eingänge zum Empfangen eines oder mehrerer Signale dienen, die eine gemessene Fahrzeuggeschwindigkeit, einen Wert für den Längsschlupf für ein oder mehrere angetriebene Räder (42) (44) des Fahrzeugs (10) und/oder einen Wert für die Fahrzeugquerbeschleunigung anzeigen; und wobei der elektronische Prozessor konfiguriert ist, um auf die Speichervorrichtung zuzugreifen und die Anweisungen, die darin gespeichert sind, derart auszuführen, dass er konfiguriert ist, um die vorhergesagte Fahrzeuggierrate in Abhängigkeit von dem einen oder den mehreren Signalen zu bestimmen, die eine gemessene Fahrzeuggeschwindigkeit, einen Wert für den Längsschlupf für ein oder mehrere angetriebene Räder (42), (44) des Fahrzeugs und/oder einen Wert für die Fahrzeugquerbeschleunigung anzeigen.

11. System nach Anspruch 9 oder 10, wobei der elektronische Prozessor konfiguriert ist, um auf die Speichervorrichtung zuzugreifen und die darin gespeicherten Anweisungen derart auszuführen, dass er konfiguriert ist, um ein erforderliches Gierdrehmoment zu bestimmen, das erforderlich ist, um die vorhergesagte Fahrzeuggierrate derart anzupassen, dass die vorhergesagte Fahrzeuggierrate gleich der Zielgierrate ist oder unter diese sinkt,

optional wobei der eine oder die mehreren elektrischen Eingänge zum Empfangen eines oder mehrerer Signale dienen, die ein Lenkradwinkelsignal, das mit einem Lenkradwinkelsensor (56) des Fahrzeugs (10) verknüpft ist, und eine Radgeschwindigkeit anzeigen, die mit einem oder mehreren Radgeschwindigkeitssensoren (52) des Fahrzeugs (10) verknüpft ist, und wobei der elektronische Prozessor konfiguriert ist, um auf die Speichervorrichtung zuzugreifen und die Anweisungen, die darin gespeichert sind, derart auszuführen, dass er konfiguriert ist, um die Zielgierrate in Abhängigkeit von dem Lenkradwinkelsignal und dem Radgeschwindigkeitssignal zu bestimmen,

und/oder wobei der elektronische Prozessor konfiguriert ist, um auf die Speichervorrichtung zuzugreifen und die Anweisungen, die darin gespeichert sind, derart auszuführen, dass er konfiguriert ist, um den Bremsmechanismus zu steuern, um das Bremsmoment an einem ausgewählten Vorderrad des Fahrzeugs (10) derart zu erhöhen, dass das erforderliche Gierdrehmoment erreicht wird.

12. System nach einem der Ansprüche 9 bis 11, wobei der elektronische Prozessor konfiguriert ist, um auf die Speichervorrichtung zuzugreifen und Anweisungen, die darin gespeichert sind, derart auszuführen, dass er konfiguriert ist, um einen Wert für den Längsschlupf eines oder mehrerer angetriebener Räder des Fahrzeugs (10) in Abhängigkeit von einem Radgeschwindigkeitssignal zu berechnen, das mit einem oder mehreren Radgeschwindigkeitssensoren des Fahrzeugs (10) verknüpft ist,

optional wobei der elektronische Prozessor konfiguriert ist, um auf die Speichervorrichtung zuzugreifen und die Anweisungen, die darin gespeichert sind, derart auszuführen, dass er für Folgendes konfiguriert ist:

Bestimmen, ob der berechnete Wert für den Längsschlupf eines oder mehrerer angetriebener Räder des Fahrzeugs (10) einen zuvor bestimmten Längsschlupfschwellenwert überschreitet;
Bestimmen, ob der berechnete Wert für den Längsschlupf ein positiver oder ein negativer Wert ist;
Bestimmen einer Fahrerbeschleunigungsanforderung für den Fall, dass der Wert für den Längsschlupf ein positiver Wert ist und dass der berechnete Wert für den Längsschlupf eines oder mehrerer angetriebener Räder des Fahrzeugs (10) den zuvor bestimmten Längsschlupfschwellenwert überschreitet;
Vergleichen der Fahrerbeschleunigungsanforderung mit einem Beschleunigungsanforderungsschwellenniveau; und
Ausgeben eines Signals, um ein Bremsmoment zu erhöhen, das auf ausgewählte Räder des Fahrzeugs (10) aufgebracht wird, für den Fall, dass die Fahrerbeschleunigungsanforderung unter den Beschleunigungsanforderungsschwellenwert sinkt.

13. System nach einem der Ansprüche 9 bis 12, wobei der elektronische Prozessor konfiguriert ist, um auf die Speichervorrichtung zuzugreifen und die Anweisungen, die darin gespeichert sind, derart auszuführen, dass er für Folgendes konfiguriert ist:

Bestimmen, ob der berechnete Wert für den Längsschlupf eines oder mehrerer angetriebener Räder des Fahrzeugs (10) einen zuvor bestimmten Längsschlupfschwellenwert überschreitet;
Bestimmen, ob ein Wert für die Querbeschleunigung des Fahrzeugs (10) einen zuvor bestimmten Querbeschleunigungsschwellenwert überschreitet; und
für den Fall, dass: der zuvor bestimmte Längsschlupfschwellenwert eines oder mehrerer angetriebener Räder des Fahrzeugs (10) den zuvor bestimmten Längsschlupfschwellenwert überschreitet; eine gemessene Fahrzeuggeschwindigkeit eine zuvor bestimmte Fahrzeuggeschwindigkeitsschwelle überschreitet; und die Fahrzeugquerbeschleunigung gleich dem zuvor bestimmten Querbeschleunigungsschwellenwert ist oder unter diesen fällt, Ausgeben eines Signals, um den Bremsmechanismus zu steuern, um das Bremsmoment an einem Paar Vorderräder des Fahrzeugs gleichzeitig zu erhöhen.

14. System nach Anspruch 12 oder 13, wobei der elektronische Prozessor konfiguriert ist, um auf die Speichervorrichtung zuzugreifen und die Anweisungen, die darin gespeichert sind, derart auszuführen, dass er konfiguriert ist, um ein Fahrzeuginstabilitätsereignis durch Ausgeben eines Signals abzuschwächen, um Folgendes anzuordnen: Erhöhen einer Lenkverstärkung, die mit dem Fahrzeug (10) verknüpft ist; Vorladen von Reibungsbremsen des Fahrzeugs (10); eines oder mehrerer Batterieschütze, sich zu öffnen; und/oder einer Antriebstrangtrennkupplung, sich zu öffnen.

15. Fahrzeug, umfassend ein System nach einem der Ansprüche 9 bis 14.

## Revendications

1. Procédé de commande d'un véhicule (10) pendant une fonction de freinage par récupération, le procédé comprenant :

   la réception (114) de données relatives à un événement de patinage longitudinal négatif ;
   la détermination d'une vitesse de lacet prédite du véhicule en fonction des données relatives à l'événement de patinage ; la comparaison de la vitesse de lacet prédite du véhicule à une vitesse de lacet cible ;
   la commande (128), (134), (142) d'un couple de freinage appliqué par un mécanisme de freinage à au moins une roue (38), (40), (42), (44) du véhicule (10) en fonction de la vitesse de lacet prédite du véhicule, et
   la prise d'une mesure supplémentaire pour atténuer un événement d'instabilité du véhicule lorsqu'une valeur de glissement longitudinal dépasse une valeur seuil.

2. Procédé selon la revendication 1, comprenant en outre la détermination de la vitesse de lacet prédite du véhicule en fonction d'une ou plusieurs d'une vitesse de véhicule mesurée, une valeur pour le glissement longitudinal pour une ou plusieurs roues motrices (42), (44) du véhicule (10) et une valeur pour l'accélération latérale du véhicule.

3. Procédé selon la revendication 1 ou la revendication 2, comprenant en outre la détermination d'un couple de lacet requis qui est requis pour ajuster la vitesse de lacet prédite du véhicule de telle sorte que la vitesse de lacet prédite du véhicule soit égale ou inférieure à la vitesse de lacet cible,

   éventuellement, comprenant en outre la réception d'un signal d'angle du volant de direction associé à un capteur d'angle du volant de direction (56) du véhicule et la réception d'un signal de vitesse de roue associé à un ou plusieurs capteurs de vitesse de roue (52) du véhicule (10), dans lequel la vitesse de lacet cible est déterminée en fonction du signal d'angle du volant de direction et du signal de vitesse de roue, et/ou
   comprenant en outre la commande du mécanisme de freinage pour accroître le couple de freinage sur une roue avant sélectionnée (38), (40) du véhicule, de telle sorte que le couple de lacet requis est atteint.

4. Procédé selon l'une quelconque des revendications précédentes, comprenant en outre le calcul d'une valeur pour le glissement longitudinal d'une ou plusieurs roues motrices (42), (44) du véhicule (10) en fonction d'un signal de vitesse de roue associé à un ou plusieurs capteurs de vitesse de roue (52) du véhicule (10),

   comprenant éventuellement en outre la détermination (116) du fait de savoir si la valeur calculée pour le glissement longitudinal d'une ou plusieurs roues motrices du véhicule (10) dépasse une valeur seuil de glissement longitudinal prédéterminée,
   comprenant en outre éventuellement la détermination (122) du fait de savoir si la valeur calculée pour le glissement longitudinal est une valeur positive ou une valeur négative.

5. Procédé selon l'une quelconque des revendications précédentes, comprenant en outre la détermination (132) du fait de savoir si une valeur d'accélération latérale du véhicule (10) dépasse une valeur seuil d'accélération latérale prédéterminée.

6. Procédé selon la revendication 4, comprenant en outre :

   la détermination (124) d'une demande d'accélération du conducteur dans le cas où la valeur pour le glissement longitudinal est une valeur positive et que la valeur calculée pour le glissement longitudinal d'une ou plusieurs roues motrices (42), (44) du véhicule (10) dépasse la valeur seuil de glissement longitudinal prédéterminée ;
   la comparaison (126) de la demande d'accélération du conducteur à un niveau de seuil de demande d'accélération ; et
   l'accroissement (128) d'un couple de freinage appliqué aux roues sélectionnées (38), (40), (42), (44) du véhicule (10) dans le cas où la demande d'accélération du conducteur tombe en dessous de la valeur seuil de demande d'accélération.

7. Procédé selon la revendication 5, lorsqu'elle dépend de la revendication 4, comprenant en outre la commande (134) du mécanisme de freinage pour augmenter le couple de freinage sur une paire de roues avant (38), (40) du véhicule (10) simultanément, dans le cas où :

   la valeur seuil de glissement longitudinal prédéterminée d'une ou plusieurs roues motrices du véhicule (10) dépasse la valeur seuil de glissement longitudinal prédéterminée ;
   une vitesse de véhicule mesurée dépasse un seuil de vitesse de véhicule prédéterminé ; et,
   l'accélération latérale du véhicule est égale ou inférieure à la valeur seuil d'accélération latérale prédéterminée.

**8.** Procédé selon l'une quelconque des revendications 4 à 7, comprenant en outre la prise de mesures pour atténuer un événement d'instabilité du véhicule en effectuant un ou plusieurs des éléments suivants : l'accroissement (138) d'un gain de direction associé au véhicule (10), la précharge (118) des freins à friction du véhicule et le déclenchement (120) des feux de détresse du véhicule et/ou comprenant en outre la prise de mesures pour atténuer un événement d'instabilité du véhicule en effectuant l'une ou les deux actions suivantes : la demande d'ouverture d'un ou plusieurs contacteurs de batterie, et la demande d'ouverture d'un embrayage de déconnexion de la chaîne cinématique.

**9.** Système de commande d'un véhicule (10) ayant une fonction de freinage par récupération, le système comprenant :

un processeur électronique ayant une ou plusieurs entrées électriques pour recevoir un signal indiquant des données relatives à un événement de patinage longitudinal négatif ; et un dispositif de mémoire électronique couplé électriquement au processeur électronique et dans lequel sont stockées des instructions, dans lequel le processeur électronique est configuré pour accéder au dispositif de mémoire et exécuter les instructions qui y sont stockées de telle sorte qu'il est configuré pour :

déterminer (136) une vitesse de lacet de véhicule prédit en fonction du signal indicatif de données relatives à l'événement de patinage ;

comparer la vitesse de lacet prédite du véhicule à une vitesse de lacet cible ;

émettre un signal pour commander un couple de freinage appliqué par un mécanisme de freinage à au moins une roue (38), (40), (42), (44) du véhicule (10) en fonction de la vitesse de lacet prédite du véhicule, et prendre une mesure supplémentaire pour atténuer un événement d'instabilité du véhicule lorsqu'une valeur de glissement longitudinal dépasse une valeur seuil.

**10.** Système selon la revendication 9, dans lequel lesdites une ou plusieurs entrées électriques sont destinées à recevoir un ou plusieurs signaux indiquant une ou plusieurs d'une vitesse de véhicule mesurée, une valeur de glissement longitudinal pour une ou plusieurs roues motrices (42), (44) du véhicule (10) et une valeur pour l'accélération latérale du véhicule ; et dans lequel le processeur électronique est configuré pour accéder au dispositif de mémoire et exécuter les instructions qui y sont stockées de telle sorte qu'il est configuré pour déterminer la vitesse de lacet prédite du véhicule en fonction dudit un ou plusieurs signaux indiquant un ou plusieurs d'une vitesse de véhicule mesurée, une valeur de glissement longitudinal pour une ou plusieurs roues motrices (42), (44) du véhicule et une valeur d'accélération latérale du véhicule.

**11.** Système selon la revendication 9 ou la revendication 10, dans lequel le processeur électronique est configuré pour accéder au dispositif de mémoire et exécuter les instructions qui y sont stockées de telle sorte qu'il es configuré pour déterminer un couple de lacet requis qui est requis pour ajuster la vitesse de lacet prédite du véhicule de telle sorte que la vitesse de lacet prédite du véhicule est égale ou inférieure à la vitesse de lacet cible,

éventuellement dans lequel lesdites une ou plusieurs entrées électriques pour recevoir un ou plusieurs signaux indiquant un signal d'angle du volant de direction associé à un capteur d'angle du volant de direction (56) du véhicule (10) et d'une vitesse de roue associée à un ou plusieurs capteurs de vitesse de roue (52) du véhicule (10), et dans lequel le processeur électronique est configuré pour accéder au dispositif de mémoire et exécuter les instructions qui y sont stockées de telle sorte qu'il est configuré pour déterminer la vitesse de lacet cible en fonction du signal d'angle du volant de direction et du signal de vitesse de roue. et/ou dans lequel le processeur électronique est configuré pour accéder au dispositif de mémoire et exécuter les instructions qui y sont stockées de telle sorte qu'il est configuré pour commander ledit mécanisme de freinage pour accroitre le couple de freinage sur une roue avant sélectionnée du véhicule (10), de telle sorte que le couple de lacet requis est atteint.

**12.** Système selon l'une quelconque des revendications 9 à 11, dans lequel le processeur électronique est configuré pour accéder au dispositif de mémoire et exécuter les instructions qui y sont stockées de telle sorte qu'il est configuré pour calculer une valeur de glissement longitudinal d'une ou plusieurs roues motrices du véhicule (10) en fonction d'un signal de vitesse de roue associé à un ou plusieurs capteurs de vitesse de roues du véhicule (10), éventuellement dans lequel le processeur électronique est configuré pour accéder au dispositif de mémoire et exécuter les instructions qui y sont stockées de telle sorte qu'il est configuré pour :

déterminer si la valeur calculée pour le glissement longitudinal d'une ou plusieurs roues motrices du véhicule (10) dépasse une valeur seuil de glissement longitudinal prédéterminée ;

déterminer si la valeur calculée pour le glissement longitudinal est une valeur positive ou négative ;

déterminer une demande d'accélération du conducteur dans le cas où la valeur pour le glissement longitudinal est une valeur positive et que la valeur calculée pour le glissement longitudinal d'une ou plusieurs roues motrices du véhicule (10) dépasse la valeur seuil de glissement longitudinal prédéterminée ;

comparer la demande d'accélération du conducteur à un niveau de seuil de demande d'accélération ; et

émettre un signal pour accroitre un couple de freinage appliqué aux roues sélectionnées, du véhicule (10) dans le cas où la demande d'accélération du conducteur tombe en dessous de la valeur seuil de demande d'accélération.

**13.** Système selon l'une quelconque des revendications 9 à 12, dans lequel le processeur électronique est configuré pour accéder au dispositif de mémoire et exécuter les instructions qui y sont stockées de telle sorte qu'il est configuré pour :

déterminer si la valeur calculée pour le glissement longitudinal d'une ou plusieurs roues motrices du véhicule (10) dépasse une valeur seuil de glissement longitudinal prédéterminée ;

déterminer si une valeur d'accélération latérale du véhicule (10) dépasse une valeur seuil d'accélération latérale prédéterminée ; et

dans le cas où : la valeur seuil de glissement longitudinal prédéterminée d'une ou plusieurs roues motrices du véhicule (10) dépasse la valeur seuil de glissement longitudinal prédéterminée ; une vitesse de véhicule mesurée dépasse un seuil de vitesse de véhicule prédéterminé ; et l'accélération latérale du véhicule est égale ou inférieure à la valeur seuil d'accélération latérale prédéterminée, émettant un signal pour commander le mécanisme de freinage afin d'accroitre le couple de freinage sur une paire de roues avant du véhicule simultanément,

**14.** Système selon la revendication 12 ou 13, dans lequel le processeur électronique est configuré pour accéder au dispositif de mémoire et exécuter les instructions qui y sont stockées de telle sorte qu'il est configuré pour atténuer un événement d'instabilité du véhicule en émettant un signal pour ordonner un ou plusieurs ou plusieurs des éléments suivants : l'augmentation d'un gain de direction associé au véhicule (10) ; la précharge des freins à friction du véhicule (10) ; l'ouverture d'un ou plusieurs contacteurs de batterie ; et l'ouverture d'un embrayage de déconnexion de la chaîne cinématique.

**15.** Véhicule comprenant un système selon l'une quelconque des revendications 9 à 14.

Figure 1

Start

Wheel speed sensors (x4) → Calculate Vehicle Speed — 110

Vehicle speed > threshold? — 112 — N

Y

Wheel speed sensors (x4) → Calculate longitudinal Wheel Slip — 114

longitudinal slip @ both rear wheels > threshold? — 116 — N

Y

Pre-Charge Friction Brakes — 118

Trigger hazard warning lights — 120

100

# Figure 2 (1 of 3)

1 of 3 - Page 2
2 of 3 - Page 3
3 of 3 - Page 4

EP 3 390 176 B1

19

# Figure 2 (2 of 3)

1 of 3 - Page 2
2 of 3 - Page 3
3 of 3 - Page 4

Longitudinal slip negative (as opposed to positive)? — 122

—N—

Accelerator pedal position → Read driver acceleration demand — 124

Accelerometer → Measure (initial) Vehicle Lateral Acceleration — 130

Driver acceleration demand below threshold — 126 —N→ End

Lateral acceleration > threshold? — 132

Increase brake pressure on all four wheels (symmetric braking) — 128

Look-Up Table: f(vehicle speed, rear wheel longitudinal slip, lateral acceleration) → Calculate prediction of Imminent (approximate) yaw rate — 136

Increase Steering Gain in direction that opposes predicted Imminent yaw acceleration — 138

N

EP 3 390 176 B1

Figure 2 (3 of 3)

1 of 3 - Page 2
2 of 3 - Page 3
3 of 3 - Page 4

EP 3 390 176 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004046448 A1
- DE 10208125 A1

- US 20070185638 A1